(19) **Europäisches Patentamt / European Patent Office / Office européen des brevets**

(11) **EP 3 337 703 B1**

(12) **FASCICULE DE BREVET EUROPEEN**

(45) Date de publication et mention de la délivrance du brevet:
**22.10.2025 Bulletin 2025/43**

(21) Numéro de dépôt: **16750949.6**

(22) Date de dépôt: **12.07.2016**

(51) Classification Internationale des Brevets (IPC):
**B60W 10/08** *(2006.01)*    **B60W 30/18** *(2012.01)*
**B60W 30/20** *(2006.01)*    **B60W 20/00** *(2016.01)*

(52) Classification Coopérative des Brevets (CPC):
**B60W 10/08; B60W 20/00; B60W 30/18118;
B60W 30/20;** B60W 10/182; B60W 2050/0022;
B60W 2050/0052; B60W 2510/082;
B60W 2510/188; B60W 2552/15; B60W 2710/083

(86) Numéro de dépôt international:
**PCT/FR2016/051784**

(87) Numéro de publication internationale:
**WO 2017/029440 (23.02.2017 Gazette 2017/08)**

(54) **PROCÉDÉ DE CONTRÔLE D'UN GROUPE MOTOPROPULSEUR ÉLECTRIQUE OU HYBRIDE, DISPOSITIF DE CONTRÔLE, GROUPE MOTOPROPULSEUR ET VÉHICULE**

VERFAHREN ZUR STEUERUNG EINES ELEKTRO- ODER HYBRIDANTRIEBSSTRANGS, STEUERGERÄT, ANTRIEBSSTRANG SOWIE FAHRZEUG

METHOD FOR CONTROLLING AN ELECTRIC OR HYBRID POWER TRAIN, CONTROL DEVICE, POWER TRAIN AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.08.2015 FR 1557794**

(43) Date de publication de la demande:
**27.06.2018 Bulletin 2018/26**

(73) Titulaire: **Ampere SAS
92100 Boulogne-Billancourt (FR)**

(72) Inventeurs:
• **FONTVIEILLE, Laurent
91190 Gif-sur-Yvette (FR)**
• **FONTAINE, Nicolas
91260 Juvisy-sur-Orge (FR)**

(74) Mandataire: **Renault Group
Renault s.a.s.
1 avenue du Golf
FR TCR AVA 055
78084 Guyancourt Cedex (FR)**

(56) Documents cités:
WO-A1-2015/107407       JP-A- 2009 143 270
US-A1- 2005 159 861      US-A1- 2015 027 798

**Description**

La présente invention concerne un procédé de contrôle d'un groupe motopropulseur (« GMP ») d'un véhicule électrique ou hybride thermique-électrique. Elle s'applique plus particulièrement dans le domaine du contrôle moteur, qui regroupe l'ensemble des techniques de gestion d'un moteur à partir des informations fournies par ses capteurs.

La présente invention résout un problème qui se produit lorsqu'un véhicule électrique ou hybride est stationné en pente. En effet, comme explicité plus en détails dans la suite de la présente demande, lorsque le frein de parking est désactivé en pente, le GMP peut se mettre à osciller sur ses suspensions, générant des chocs mécaniques pouvant être fortement ressentis par les occupants du véhicule.

L'état de la technique, notamment la demande de brevet US2009/0043465A1, suggère de bloquer préventivement le GMP. Un inconvénient majeur de cette solution préventive est d'ordre sécuritaire, car elle génère un risque de déplacement inattendu du véhicule lorsque le frein de parking est désactivé sur le plat : si une pente a été détectée par erreur, alors le GMP est bloqué pour rien et c'est sa libération qui provoque le déplacement inattendu du véhicule. Il s'agit d'un problème que la présente invention se propose de résoudre.

La demande de brevet US2015/027798A1 divulgue un procédé de contrôle d'un GMP présentant les mêmes inconvénients que le procédé selon US2009/0043465A1.

L'invention a donc pour but de remédier aux inconvénients précités, notamment de réduire les oscillations d'un GMP électrique ou hybride lors de la désactivation du frein de parking, sans risque de déplacement inattendu, par une méthode de correction curative et non pas préventive. A cet effet, la présente invention a pour objet un procédé selon la revendication 1.

La présente invention a également pour objet un dispositif selon la revendication 4.

La présente invention a également pour objet un groupe motopropulseur comportant un tel dispositif, ainsi qu'un véhicule électrique ou hybride comportant un tel groupe motopropulseur.

D'autres caractéristiques et avantages de l'invention apparaîtront à l'aide de la description qui suit faite en regard des figures annexées :

- 1, 2a, 2b, 2c, 2d, 3a, 3b, 3c, 3d et 4 qui illustrent la problématique posée par l'état de la technique ;
- 5, 6, 7, 8, 9 et 10 qui illustrent un exemple non limitatif de réalisation de l'invention, résolvant cette problématique.

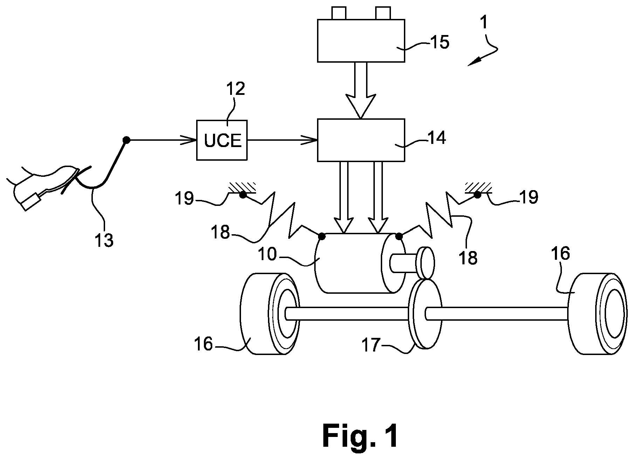

Comme illustré à la figure 1, l'ensemble des lois de commande d'un moteur électrique 10 d'un véhicule 1, accompagnées de leurs paramètres, sont implémentées sous forme logicielle dans un calculateur 12 communément appelé UCE (Unité de Contrôle Electronique). Le contrôle moteur a pour rôle de traduire la volonté d'un conducteur, connue à partir des informations reçue de capteurs de pédales 13 d'accélérateur et de frein, en une consigne de couple moteur positive ou négative. Cette consigne de couple est ensuite transmise à un module 14 d'électronique de puissance, qui inclut notamment un onduleur et un hacheur, qui traduit cette consigne de couple en des consignes de tension et d'intensité d'un courant fourni par une batterie 15. Le moteur 10 reçoit ces valeurs de tension et d'intensité, convertissant ainsi de la puissance électrique en couple moteur. Enfin, ce couple est transmis à des roues 16 du véhicule par l'intermédiaire d'un réducteur 17. L'ensemble constitué par le moteur 10 et le réducteur 17 forme le GMP du véhicule 1.

Le GMP est supporté par la caisse 19 du véhicule 1 par l'intermédiaire d'un système de suspension 18, dont le rôle est de limiter la propagation des vibrations générées par le moteur 10. En fonction du couple moteur transmis aux roues 16, et dans la limite de leurs capacités de déformation, ces suspensions 18 autorisent le GMP à se déplacer autour de l'axe des roues 16. Ces déplacements s'apparentent à des pivotements du GMP autour de l'axe des roues motrices 16. Le sens de pivotement du moteur 10 est fonction du signe du couple produit par le GMP.

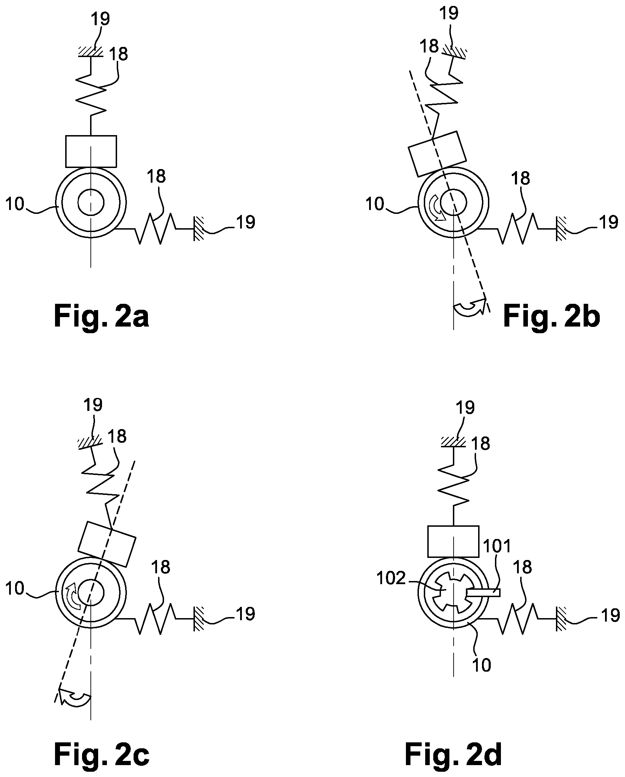

Ainsi, comme illustré par la figure 2a, lorsqu'il délivre un couple nul, le GMP reste dans une position d'équilibre ou de repos.

Avec un couple positif correspondant à un mode moteur en marche avant ou un mode générateur en marche arrière, comme illustré par la figure 2b, le GMP pivote vers l'arrière dans le sens inverse du couple moteur.

Avec un couple négatif correspondant à un mode moteur en marche arrière ou un mode générateur en marche avant, comme illustré par la figure 2c, le GMP pivote vers l'avant dans le sens inverse du couple moteur.

Pour assurer l'immobilisation du véhicule 1 à l'arrêt du moteur 10, une fonction de stationnement dite « Park » permet de verrouiller mécaniquement le GMP de manière à interdire tout pivotement. Comme illustré par la figure 2d, le blocage en rotation GMP est assuré par un doigt de parking 101 venant s'engager dans une couronne dentée 102 fixée en sortie du moteur 10 ou du réducteur 17. L'actionnement du doigt 101 est soit mécanique via un levier, soit commandée électriquement via un bouton, les deux étant manipulés par le conducteur.

Un problème se produit lorsque que le véhicule 1 est stationné en pente. En effet, lorsque le véhicule 1 est stationné en pente, une force vient s'exercer sur le doigt 101 : cette force est fonction de la masse du véhicule 1 et de l'angle de la pente. Le rotor du moteur 10 étant mécaniquement solidaire du stator, la force provoque le pivotement du moteur 10 et du GMP dans son ensemble. Le pivotement du moteur 10 est donc lui aussi fonction de la masse et de l'angle de la pente. Le sens du pivotement dépend du sens de la pente (montante ou descendante) ou encore de l'orientation du véhicule par rapport à la pente (face ou dos à la pente).

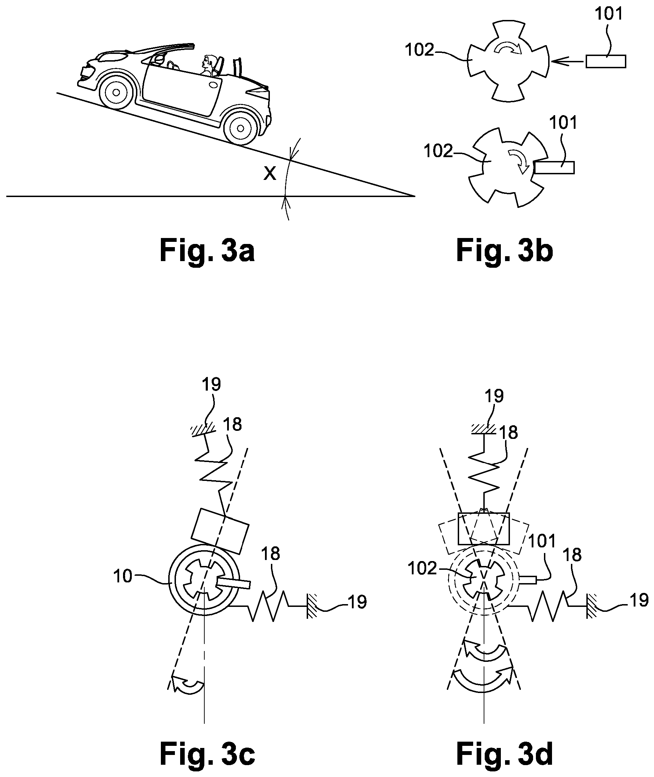

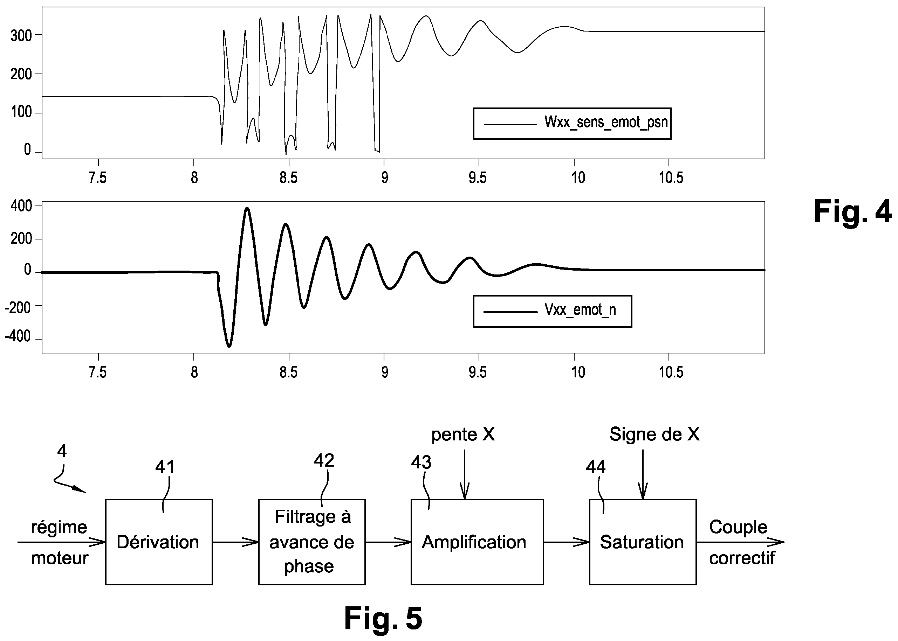

Les figures 3a, 3b, 3c et 3d illustrent ce problème dans le cas d'un véhicule orienté face à une pente de valeur x. La figure 3b illustre la phase d'engagement du doigt 101 : tant que le doigt n'est pas engagé, le moteur tourne négativement, jusqu'à ce que le doigt 101 trouve un espace inter-denture, puis rattrape le jeu inter-denture. La figure 3c illustre le pivotement du GMP après cette phase d'engagement. La masse du véhicule exerce une force sur le doigt 101, se traduisant par le pivotement du GMP. Ce pivotement n'est pas vu par le moteur 10, car son stator et son rotor sont liés par le doigt 101. Le véhicule 1 se trouve alors immobilisé dans un état stable, jusqu'à ce que le conducteur désactive la fonction Park. La figure 3d illustre le désengagement du doigt 101 : lors du désengagement du doigt 101, les suspensions 18 ramènent « librement » le GMP dans sa position de repos. Cette phase de libération n'est pas maitrisée et génère des oscillations du GMP autour de sa position d'équilibre, c'est-à-dire une alternance de pivotements dans le sens positif puis dans le sens négatif. Le nombre et l'amplitude des oscillations sont fonctions de la force exercée sur le doigt 101 avant son désengagement, des caractéristiques des suspensions 18 (élasticité, amortissement, raideur, etc) et de la masse du GMP. Par exemple, la figure 4 illustre graphiquement, en fonction du temps exprimé en secondes en abscisse, l'évolution de la position en degrés du rotor notée Wxx_sens_emot_psn et de la vitesse de rotation en tours par minute du moteur notée Vxx_emot_n lors d'un désengagement du doigt 101 à un instant t=8,25 dans une pente de 26%. Ces oscillations, qui durent quasiment 2 secondes jusqu'à un instant t=10, sont fortement ressenties par les occupants du véhicule 1 et sont accompagnées de bruits de chocs mécaniques. Elles génèrent donc une gêne pour les occupants du véhicule 1. Il s'agit là d'un problème que la présente invention se propose de résoudre.

Pour résoudre ce problème, la demande de brevet citée précédemment suggère d'appliquer de manière préventive un couple préalablement au désengagement du doigt, de manière à maintenir immobile le GMP après desserrage du frein. Un inconvénient majeur de cette solution est d'ordre sécuritaire, car il est très compliqué avec cette solution de garantir qu'il n'y a aucun risque de déplacement inattendu du véhicule lors du désengagement du doigt, notamment lors de la libération du frein (le conducteur pouvant intervenir pendant le désengagement), tout simplement parce-que l'information de pente peut être erronée. Il y a alors un risque d'application d'une force sur du plat ou d'une force de signe contraire, entrainant brièvement le véhicule dans un déplacement inattendu pour le conducteur.

Un but de l'invention est de résoudre les problèmes et inconvénients précités au désengagement du doigt de parking, ceci en corrigeant dynamiquement le régime moteur : il s'agit de détecter les variations rapides du régime moteur et de les amortir par l'application d'un couple moteur contraire à ces variations. Selon l'invention, la correction doit être strictement positive en pente négative et strictement négative en pente positive, en opposition à la dérivée du régime moteur, modulée en amplitude en fonction de la pente, de sorte que la correction soit brève mais très amortie.

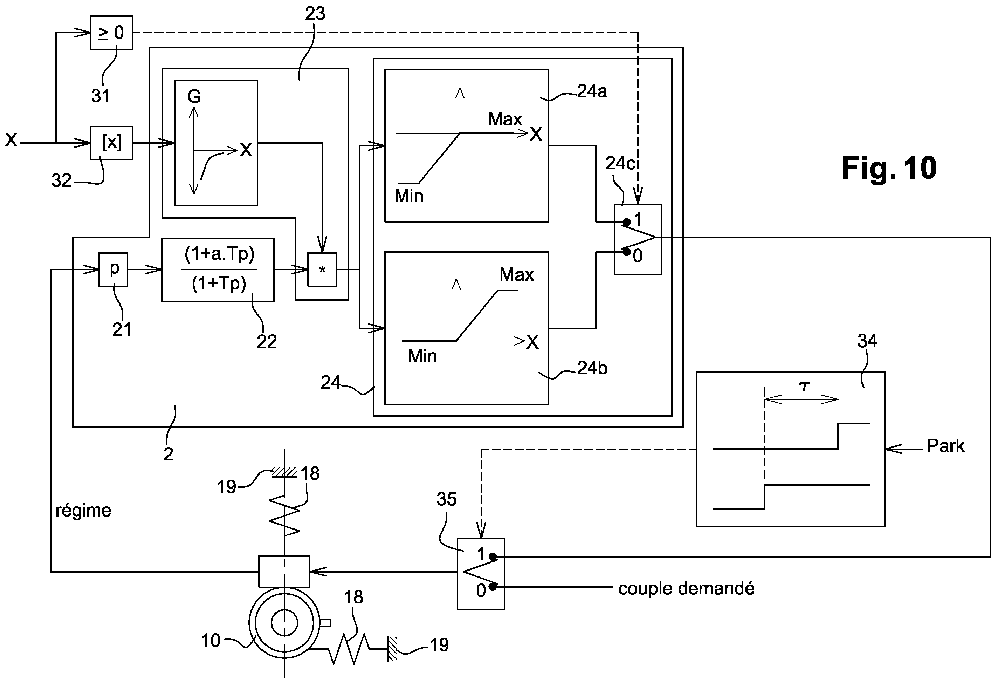

Dans un mode de réalisation préféré car simple à mettre en œuvre, illustré par le diagramme fonctionnel figure 5, un procédé 4 selon l'invention prenant en entrée le régime du moteur peut par exemple comporter une étape 41 de dérivation, afin de ne prendre en compte que les variations du régime moteur, suivie d'une étape 42 de filtrage à avance de phase, afin d'assurer une sensibilité suffisante aux variations du régime, suivie d'une étape 43 d'amplification, afin de moduler l'amplitude du couple de correction, suivie d'une étape 44 de saturation, afin d'adapter le sens de la correction au sens de la pente ainsi qu'aux possibilités du moteur. Le procédé fournit en sortie une valeur de couple correctif. Ce même mode de réalisation est illustré par le diagramme d'architecture de la figure 10, où un correcteur 2 selon l'invention peut par exemple comporter les modules suivants :

- un module de dérivation 21 mettant en œuvre l'étape 41 de dérivation ;
- un module de filtrage 22 mettant en œuvre l'étape 42 de filtrage à avance de phase ;
- un module d'amplification 23 mettant en œuvre l'étape 43 de d'amplification ;
- un module de saturation 24 mettant en œuvre l'étape 44 de saturation, ne permettant notamment, en fonction du signe de la pente x déterminé par un module 31, que du couple négatif via un module 24a ou que du couple positif via un module 24b, un commutateur 24c permettant de sélectionner de manière exclusive soit la sortie du module 24a, soit la sortie du module 24b, en fonction du signe de la pente x reçu du module 31.

Le correcteur 2 reçoit le régime du moteur 10 en entrée du module de dérivation 21, il reçoit la valeur absolue |x| de la pente (en %) déterminée par un module 32 en entrée du module d'amplification 23 et il reçoit le signe de la pente x en entrée du module de saturation 24. Le correcteur 2 fournit en sortie du module de saturation 24 une valeur de couple de correction.

Un module 24 permet, en sortie de la position Park, d'activer la correction sur un laps de temps prédéfini $\zeta$, de l'ordre de 0,5 secondes par exemple, décompté à partir de la détection des oscillations. Un module 35 permet de ne prendre en compte le couple de correction que pendant ce laps de temps $\zeta$, le couple demandé par le conducteur étant pris en compte après expiration de ce laps de temps $\zeta$.

Les paramètres de réglage du correcteur 2 sont donc le coefficient du filtre à avance de phase (noté a), la constante de temps du filtre à avance de phase (notée T), la donnée du gain G appliqué par le module d'amplification 23 en fonction de la pente x, ainsi que les valeurs limites Min et Max du coefficient de saturation appliqué par le module de saturation 24 en fonction du moteur utilisé et du signe de la pente.

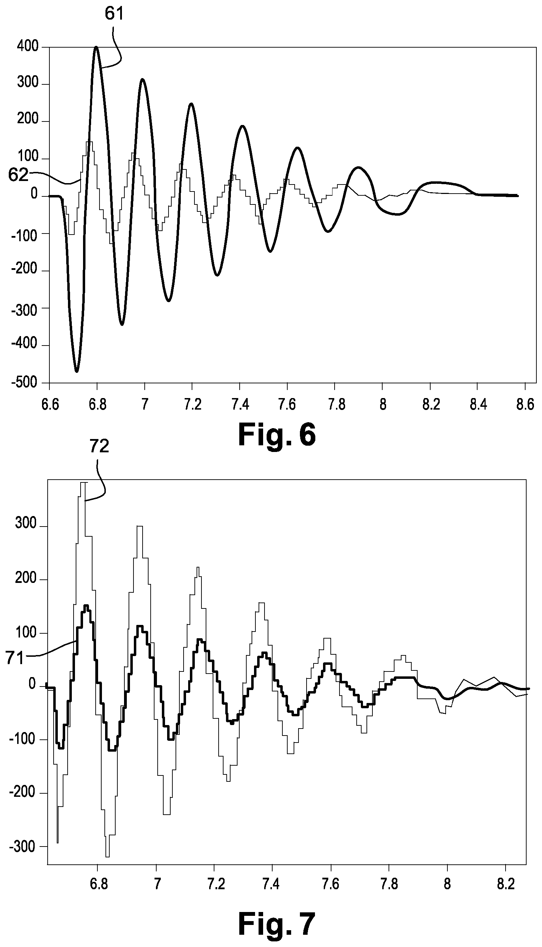

Durant la première étape 41 illustrée par le graphe de la figure 6, qui représente l'évolution en fonction du temps du régime moteur en tours par minutes sans correction (courbe 61 tracée en clair présentant les variations de plus grande amplitude) ainsi que sa dérivée en tours par minute par seconde (courbe 62 tracée en plus foncé présentant les variations de plus faible amplitude), le module de dérivation 21 permet d'estimer la variation de la vitesse de rotation du moteur 10, c'est-à-dire son accélération. Le couple de correction qui sera appliqué au moteur pour atténuer ses oscillations sera proportionnel à cette accélération. Par exemple, elle peut être calculée par application de la formule de la dérivée dans le domaine de Laplace, la fonction de transfert du dérivateur 21 étant notée p.

Durant la deuxième étape 42 illustrée par le graphe de la figure 7, qui représente l'évolution en fonction du temps de la dérivée du régime moteur sans correction en tours par minute par seconde (courbe 71 tracée en clair présentant les variations de plus faible amplitude) ainsi que cette même dérivée une fois corrigée par le module de filtrage à avance de phase 22 (courbe 72 tracée en plus foncé présentant les variations de plus grande amplitude), ce dernier permettant de détecter la moindre variation du régime et donc de ne pas avoir de retard de correction. Ce filtre est défini par la fonction de transfert FT suivante :

$$FT = (1 + a.Tp) / (1 + Tp)$$

où :

- T est la constante de temps du filtre définie en fonction de la fréquence de résonnance f du système à corriger (le moteur dans le cas présent, de l'ordre de 5 Hz), avec T=1/f ;
- a est un coefficient de réglage à ajuster en fonction de l'avance de phase souhaitée, avec une valeur toujours supérieure ou égale à 1, de l'ordre de 3 dans le présent exemple de réalisation. Après le module de filtrage 22, la réponse est décalée dans le temps afin d'obtenir un meilleur temps de réponse du correcteur.

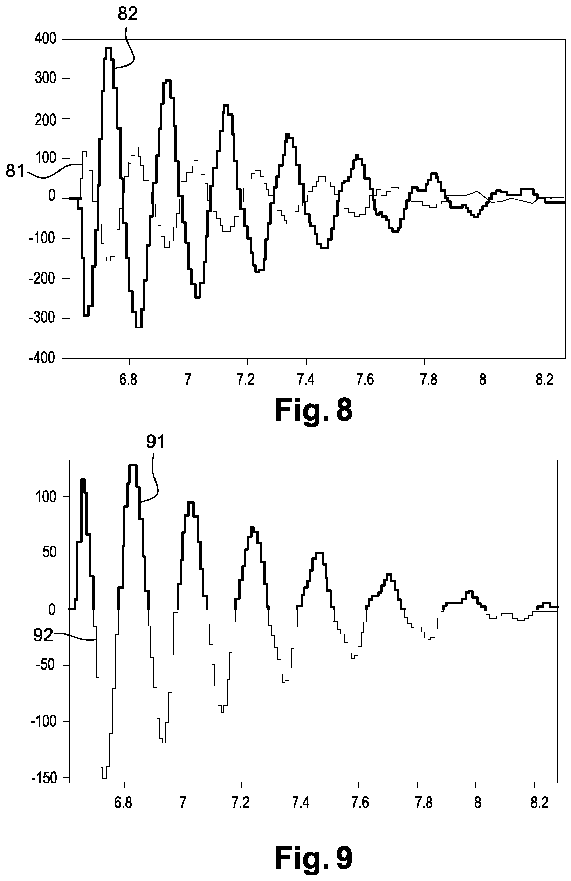

Durant la troisième étape 43 illustrée par le graphe de la figure 8, qui représente l'évolution en fonction du temps de la consigne de correction du couple moteur en Newton-mètre (courbe 81 tracée en foncé présentant les variations de plus faible amplitude) ainsi que la dérivée du régime moteur corrigé par avance de phase (courbe 82 tracée en plus clair présentant les variations de plus grande amplitude), le module d'amplification 23 applique un gain négatif afin d'inverser le signe du couple calculé, de sorte que ce dernier soit en opposition de phase avec l'accélération du moteur, ceci dans le but de le freiner. D'autre part, le gain est utilisé pour moduler l'amplitude du couple. Dans l'objectif d'obtenir une correction robuste et efficace quel que soit le niveau de pente dans lequel se trouve le véhicule, le gain peut être défini en fonction de l'information inclinaison du véhicule, cette inclinaison pouvant par exemple être fournie par un dispositif de correction automatique de trajectoire, de type « ESP ». Ainsi, le couple en sortie du module d'amplification 23 est de signe opposé et modulé en fonction des limites du moteur. Dans le présent exemple de réalisation, la valeur du gain a été choisie dans l'intervalle [-1 ; -0.4], avec une augmentation (ou une diminution en valeur absolue) proportionnelle à l'augmentation de la pente.

Durant la quatrième étape 44 illustrée par le graphe de la figure 9, qui représente l'évolution dans le temps de la consigne de correction de couple moteur en Newton-mètre (courbe 91 tracée en clair présentant des variations alternativement positive et négative) ainsi que cette même consigne saturée par le module de saturation 24 (courbe 92 tracée en plus foncé ne présentant que des variations négatives), ce dernier permettant, en fonction des limites du moteur utilisé, de limiter la demande maximale de couple, de manière à ne pas demander au moteur de fournir un couple correctif qui soit au-delà de ses possibilités. Il permet également de saturer le couple négativement ou positivement respectivement en pente positive ou négative, afin de limiter l'effet du retard lié à la réalisation du couple. Cette saturation est donc également définie en fonction du signe de la pente, obtenu par exemple à l'aide d'un dispositif de correction automatique de trajectoire.

Outre le fait d'empêcher tout déplacement inattendu du véhicule, la présente invention a encore pour principal avantage d'offrir une excellente sensibilité aux variations du régime moteur, c'est-à-dire de la réactivité. Certes, avec la correction selon l'invention, le premier choc n'est pas supprimé, mais il est drastiquement réduit. Par contre, si l'oscillation est nulle, par exemple si le véhicule est garé sur le plat, alors la correction est forcément nulle elle aussi, et donc il n'y a plus aucun risque de déplacement inattendu du véhicule.

## Revendications

1. Procédé de contrôle (4) du groupe motopropulseur d'un véhicule (1), le groupe étant monté au véhicule par l'intermédiaire de suspensions (18) et comportant un moteur électrique (10) apte à transmettre un couple à des roues (16) du véhicule, le groupe motopropuleur comportant un doigt de blocage (101), le doigt étant apte à passer :

   - d'une configuration d'engagement où le rotor (102) du moteur est solidaire du stator du moteur, afin d'assurer l'immobilisation du véhicule ;
- à une configuration de désengagement où le rotor (102) est libre du stator, afin d'autoriser le roulage du véhicule ;

le procédé étant **caractérisé en ce qu'**il inclut une étape de correction dynamique du régime du moteur qui, au passage de la configuration d'engagement à la configuration de désengagement du doigt de blocage lorsque le véhicule est immobilisé dans une pente, module la correction en fonction de la valeur de la pente (x) ainsi que de son sens montant ou descendant relativement au véhicule, ladite étape de correction dynamique incluant une étape de saturation (44), afin d'orienter la correction en fonction du sens montant ou descendant de la pente relativement au véhicule et de limiter son amplitude en fonction des capacités du moteur, la correction étant strictement positive en pente négative et strictement négative en pente positive, en opposition à la dérivée du régime moteur, modulée en amplitude en fonction de la pente , de telle sorte que les oscillations du groupe motopropulseur sur les suspensions autour de l'axe des roues sont amorties.

2. Procédé selon la revendication 1, l'étape de correction dynamique incluant, préalablement à l'étape de saturation (44) :

   - une étape de mesure du régime du moteur ;
   - une étape de dérivation du régime (41), afin d'estimer les variations de la vitesse de rotation du moteur ;
   - une étape de filtrage à avance de phase (42), afin d'augmenter la sensibilité de la correction à ces variations ;
   - une étape d'amplification (43), afin de moduler l'amplitude de la correction en fonction de la valeur de la pente (x) dans laquelle le véhicule est immobilisé.

3. Procédé selon la revendication précédente, **caractérisé en ce que** l'étape d'amplification inclut d'appliquer à la correction une valeur de gain (G) qui est une fonction croissante de la valeur de pente (x).

4. Dispositif de contrôle du groupe motopropulseur d'un véhicule (1), le groupe étant monté au véhicule par l'intermédiaire de suspensions (18) et comportant un moteur électrique (10) apte à transmettre un couple à des roues (16) du véhicule, le groupe motopropulseur comportant un doigt de blocage (101), le doigt étant apte à passer :

   - d'une configuration d'engagement où le rotor (102) du moteur est solidaire du stator du moteur, afin d'assurer l'immobilisation du véhicule ;
   - à une configuration de désengagement où le rotor (102) est libre du stator, afin d'autoriser le roulage du véhicule ;

   le dispositif étant **caractérisé en ce qu'**il inclut un module de correction dynamique (2) du régime du moteur incluant :

   - un module de mesure du régime du moteur ;
   - un module de dérivation du régime (21), afin d'estimer les variations de la vitesse de rotation du moteur ;
   - un module de filtrage à avance de phase (22), afin d'augmenter la sensibilité de la correction à ces variations ;
   - un module d'amplification (23), afin de moduler l'amplitude de la correction en fonction de la valeur d'une pente (x) dans laquelle le véhicule est immobilisé, la correction étant strictement positive en pente négative et strictement négative en pente positive, en opposition à la dérivée du régime moteur, modulée en amplitude en fonction de la pente ;
   - un module de saturation (24), afin d'orienter la correction en fonction du sens montant ou descendant de la pente relativement au véhicule et de limiter son amplitude en fonction des capacités du moteur

   de telle sorte que, au passage de la configuration d'engagement à la configuration de désengagement du doigt de blocage, lorsque le véhicule est immobilisé dans la pente, les oscillations du groupe motopropulseur sur les suspensions autour de l'axe des roues sont amorties.

5. Groupe motopropulseur comportant un dispositif selon la revendication 4.

6. Véhicule électrique ou hybride (1) comportant un groupe motopropulseur selon la revendication 5.

**Patentansprüche**

1. Verfahren zur Steuerung (4) des Antriebsstrangs eines Fahrzeugs (1), wobei der Strang an dem Fahrzeug über Aufhängungen (18) montiert ist und einen Elektromotor (10) umfasst, der geeignet ist, ein Drehmoment an Räder (16) des Fahrzeugs zu übertragen, wobei der Antriebsstrang einen Blockierfinger (101) umfasst, wobei der Finger dazu geeignet ist, überzugehen:

   - von einer Eingriffskonfiguration, in welcher der Rotor (102) des Motors mit dem Stator des Motors verbunden ist, um die Immobilisierung des Fahrzeugs zu gewährleisten;

- zu einer Lösekonfiguration, in welcher der Rotor (102) von dem Stator frei ist, um das Fahren des Fahrzeugs zuzulassen;

wobei das Verfahren **dadurch gekennzeichnet ist, dass** es einen Schritt der dynamischen Korrektur der Drehzahl des Motors beinhaltet, der beim Übergang des Blockierfingers von der Eingriffskonfiguration zu der Lösekonfiguration, wenn das Fahrzeug auf einem Gefälle immobilisiert ist, die Korrektur in Abhängigkeit von dem Wert des Gefälles (x) sowie von seiner steigenden oder fallenden Richtung bezüglich des Fahrzeugs moduliert, wobei der Schritt der dynamischen Korrektur einen Sättigungsschritt (44) beinhaltet, um die Korrektur in Abhängigkeit von der steigenden oder fallenden Richtung des Gefälles bezüglich des Fahrzeugs auszurichten und ihre Amplitude in Abhängigkeit von den Kapazitäten des Motors zu begrenzen, wobei die Korrektur bei negativem Gefälle strikt positiv und bei positivem Gefälle strikt negativ ist, entgegen der Ableitung der Motordrehzahl, und in Abhängigkeit von dem Gefälle amplitudenmoduliert wird, so dass die Schwingungen des Antriebsstrangs an den Aufhängungen um die Achse der Räder herum gedämpft werden.

2. Verfahren nach Anspruch 1, wobei der Schritt der dynamischen Korrektur vor dem Sättigungsschritt (44) beinhaltet:

- einen Schritt des Messens der Drehzahl des Motors;
- einen Schritt des Ableitens der Drehzahl (41), um die Schwankungen der Drehgeschwindigkeit des Motors zu schätzen;
- einen Schritt des Filterns mit Phasenvoreilung (42), um die Empfindlichkeit der Korrektur gegenüber diesen Schwankungen zu erhöhen;
- einen Schritt des Verstärkens (43), um die Amplitude der Korrektur in Abhängigkeit von dem Wert des Gefälles (x), auf dem das Fahrzeug immobilisiert ist, zu modulieren.

3. Verfahren nach dem vorhergehenden Anspruch, **dadurch gekennzeichnet, dass** der Schritt des Verstärkens das Anwenden eines Verstärkungswerts (G), der eine wachsende Funktion des Gefällewerts (x) ist, auf die Korrektur beinhaltet.

4. Vorrichtung zur Steuerung des Antriebsstrangs eines Fahrzeugs (1), wobei der Strang an dem Fahrzeug über Aufhängungen (18) montiert ist und einen Elektromotor (10) umfasst, der geeignet ist, ein Drehmoment an Räder (16) des Fahrzeugs zu übertragen, wobei der Antriebsstrang einen Blockierfinger (101) umfasst, wobei der Finger dazu geeignet ist, überzugehen:

- von einer Eingriffskonfiguration, in welcher der Rotor (102) des Motors mit dem Stator des Motors verbunden ist, um die Immobilisierung des Fahrzeugs zu gewährleisten;
- zu einer Lösekonfiguration, in welcher der Rotor (102) von dem Stator frei ist, um das Fahren des Fahrzeugs zuzulassen;

wobei die Vorrichtung **dadurch gekennzeichnet ist, dass** sie ein Modul zur dynamischen Korrektur (2) der Drehzahl des Motors beinhaltet, das beinhaltet:

- ein Modul zum Messen der Drehzahl des Motors;
- ein Modul zum Ableiten der Drehzahl (21), um die Schwankungen der Drehgeschwindigkeit des Motors zu schätzen;
- ein Modul zum Filtern mit Phasenvoreilung (22), um die Empfindlichkeit der Korrektur gegenüber diesen Schwankungen zu erhöhen;
- ein Verstärkungsmodul (23), um die Amplitude der Korrektur in Abhängigkeit von dem Wert eines Gefälles (x), auf dem das Fahrzeug immobilisiert ist, zu modulieren, wobei die Korrektur bei negativem Gefälle strikt positiv und bei positivem Gefälle strikt negativ ist, entgegen der Ableitung der Motordrehzahl, und in Abhängigkeit von dem Gefälle amplitudenmoduliert wird;
- ein Sättigungsmodul (24), um die Korrektur in Abhängigkeit von der steigenden oder fallenden Richtung des Gefälles bezüglich des Fahrzeugs auszurichten und ihre Amplitude in Abhängigkeit von den Kapazitäten des Motors zu begrenzen,

so dass, beim Übergang des Blockierfingers von der Eingriffskonfiguration zu der Lösekonfiguration, wenn das Fahrzeug auf dem Gefälle immobilisiert ist, die Schwingungen des Antriebsstrangs an den Aufhängungen um die Achse der Räder herum gedämpft werden.

5. Antriebsstrang mit einer Vorrichtung nach Anspruch 4.

6. Elektro- oder Hybridfahrzeug (1) mit einem Antriebsstrang nach Anspruch 5.

**Claims**

1. Method (4) for controlling the power train of a vehicle (1), the power train being mounted on the vehicle by means of suspension elements (18) and including an electric motor (10) capable of transmitting torque to wheels (16) of the vehicle, the power train including a locking pin (101), the pin being moveable:

> - from an engagement configuration in which the rotor (102) of the motor is rigidly connected to the stator of the motor, thereby immobilizing the vehicle;
> - to a disengagement configuration in which the rotor (102) is released from the stator, thereby enabling the vehicle to move;

the method being **characterized in that** it includes a step of dynamically correcting the speed of the motor which, when the locking pin moves from the engagement configuration to the disengagement configuration when the vehicle is immobilized on a slope, modulates the correction as a function of the value of the slope (x) as well as its upward or downward direction relative to the vehicle, said dynamic correction step including a saturation step (44), in order to orient the correction as a function of the upward or downward direction of the slope relative to the vehicle and to limit its amplitude as a function of the capabilities of the motor, the correction being strictly positive on negative slopes and strictly negative on positive slopes, opposing the derivative of the motor speed, which is modulated in amplitude as a function of the slope, thereby damping the oscillations of the power train on the suspension elements around the axle of the wheels.

2. Method according to Claim 1, the dynamic correction step including, before the saturation step (44):

> - a step of measuring the speed of the motor;
> - a step (41) of calculating the derivative of the motor speed, in order to estimate the variations in the rotational speed of the motor;
> - a phase-advance filtering step (42), in order to increase the sensitivity of the correction to these variations;
> - an amplification step (43), in order to modulate the amplitude of the correction as a function of the value of the slope (x) on which the vehicle is immobilized.

3. Method according to the preceding claim, **characterized in that** the amplification step includes applying to the correction a gain value (G) which is an increasing function of the slope value (x).

4. Device for controlling the power train of a vehicle (1), the power train being mounted on the vehicle by means of suspension elements (18) and including an electric motor (10) capable of transmitting torque to wheels (16) of the vehicle, the power train including a locking pin (101), the pin being moveable:

> - from an engagement configuration in which the rotor (102) of the motor is rigidly connected to the stator of the motor, thereby immobilizing the vehicle;
> - to a disengagement configuration in which the rotor (102) is released from the stator, thereby enabling the vehicle to move;
> the device being **characterized in that** it includes a module (2) for dynamically correcting the speed of the motor including:

>> - a module for measuring the speed of the motor;
>> - a module (21) for calculating the derivative of the motor speed, in order to estimate the variations in the rotational speed of the motor;
>> - a phase-advance filtering module (22), in order to increase the sensitivity of the correction to these variations;
>> - an amplification module (23), in order to modulate the amplitude of the correction as a function of the value of a slope (x) on which the vehicle is immobilized, the correction being strictly positive on negative slopes and strictly negative on positive slopes, opposing the derivative of the motor speed, which is modulated in amplitude as a function of the slope;
>> - a saturation module (24), in order to orient the correction as a function of the upward or downward direction of the slope relative to the vehicle and to limit its amplitude as a function of the capabilities of the motor

> in such a way that, when the locking pin is moved from the engagement configuration to the disengagement configuration, when the vehicle is immobilized on the slope, the oscillations of the power train on the suspension elements about the wheel axis are damped.

5. Power train including a device according to Claim 4.

6. Electric or hybrid vehicle (1) including a power train according to Claim 5.

**Fig. 1**

**Fig. 2a**

**Fig. 2b**

**Fig. 2c**

**Fig. 2d**

101

102

**Fig. 3a**

**Fig. 3b**

101

102

19

18

18

10

19

19

18

102

101

18

19

**Fig. 3c**

**Fig. 3d**

Fig. 4

Fig. 5

EP 3 337 703 B1

**Fig. 6**

**Fig. 7**

**Fig. 8**

**Fig. 9**

**Fig. 10**

EP 3 337 703 B1

**EP 3 337 703 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090043465 A1

- US 2015027798 A1